# EUROPÄISCHE PATENTSCHRIFT

(11) **EP 2 002 877 B1**
(45) Veröffentlichungstag und Bekanntmachung des Hinweises auf die Patenterteilung: **16.02.2011**
(21) Anmeldenummer: 08010115.7
(22) Anmeldetag: 03.06.2008
(51) Int. Cl.: B01D 53/047, C01B 3/56

(54) **Verfahren zur Wasserstoffabtrennung aus Gasströmen mittels Druckwechseladsorptionsverfahren**
Method for hydrogen separation from gas streams using pressure swing adsorption process
Procédé de séparation d'hydrogène des flux de gaz à l'aide d'un procédé d'adsorption alternée sous pression

(30) Priorität: 15.06.2007 DE 102007027723
(43) Veröffentlichungstag der Anmeldung: 17.12.2008
(73) Patentinhaber: Linde AG, 80331 München (DE)
(72) Erfinder: Hofmann, Karl-Heinz, Dr., 82110 Germering (DE); Leitgeb, Paul, Dr., 82049 Pullach (DE); Wenning, Ulrike, Dr., 82049 Pullach (DE); Zander, Hans-Jörg, Dr., 81479 München (DE); Leitmayr, Werner, 86633 Neuburg/Donau (DE)

(56) Entgegenhaltungen:
- EP-A- 1 736 437
- WO-A-2006/097703
- DE-A1- 3 427 804
- DE-A1- 19 625 093

## Beschreibung

Die Erfindung betrifft ein Verfahren zur Abtrennung von Wasserstoff aus einem Gasstrom mit Sauerstoffanteil, überwiegend bestehend aus Wasserstoff, Stickstoff, Sauerstoff, Kohlendioxid, Kohlenmonoxid, Methan und/oder anderen Kohlenwasserstoffen.

Die Erfindung wird am Beispiel der Abtrennung von Wasserstoff aus Koksofengas beschrieben, ist aber zur Abtrennung von Wasserstoff aus einem beliebigen Gasstrom einer beliebigen Zusammensetzung der oben genannten Komponenten geeignet und daher nicht auf Koksofengas eingeschränkt.

Bei der Herstellung von Koks in Kokereien wird zumeist Steinkohle unter Luftabschluss erhitzt. Dabei entstehen Koks, Koksgas und Teer. Der kohlenstoffreichere Koks wird hauptsächlich zur Eisenerzeugung genutzt. Das überwiegend aus Wasserstoff, Methan und Kohlenmonoxid bestehende Koksgas wird nach dem Stand der Technik hauptsächlich als Industriebrennstoff eingesetzt. Koksofengas besitzt jedoch nur rund die Hälfte des Heizwertes von Erdgas und ist häufig durch Begleitstoffe verunreinigt, die Schadstoffemissionen oder Betriebsstörungen verursachen können. Daher ist man im Zuge strengerer Umweltrichtlinien bemüht, alternative Verwendungen für Koksofengas zu finden.

Oft besteht Koksgas zu ca. 60% aus Wasserstoff. Wasserstoff wird unter anderem in großen Mengen in Erdölraffinerien zur Reduktion des Schwefelgehaltes von Mitteldestillaten in sogenannten Hydrotreatern und zur Spaltung verschiedener Erdölfraktionen in so genannten Hydrocrackern benötigt. Zusätzlich findet Wasserstoff bei der Reduzierung von Metalloxiden, der Ammoniakherstellung, als Treibstoff oder in Brennstoffzellen Verwendung. Ein Verfahren nach dem Stand der Technik zur Abtrennung von Wasserstoff aus einem Gasstrom, der neben Wasserstoff überwiegend Stickstoff, Kohlendioxid, Kohlenmonoxid und Methan neben Verunreinigungen von Sauerstoff und Argon enthält, wird in EP 1033346 beschrieben. Bei einem Verfahren zur Druckwechseladsorption nach dem Stand der Technik wird das Gasgemisch unter hohen Druck in einem Reaktor mit einem Adsorber geführt. Abhängig vom herrschenden Druck und dem Adsorbermaterial adsorbieren die Komponenten des Gasgemisches unterschiedlich stark auf dem Adsorbermaterial. Im Idealfall adsorbieren alle Komponenten des Gasgemisches auf den Adsorber mit Ausnahme von Wasserstoff. Wasserstoff wird so mit hoher Reinheit von den restlichen Komponenten abgetrennt. Die Regeneration des Adsorbers erfolgt bei niedrigem Druck durch Desorption der gebundenen Komponenten, die dann ebenfalls gasförmig aus dem Reaktor abgezogen werden können. Mit einem Druckwechseladsorptionsverfahren kann somit unter Verwendung von mehreren Reaktoren, die jeweils wechselseitig adsorbieren, bzw. desorbieren, Wasserstoff mit einer hohen Reinheit von den restlichen gasförmigen Komponenten abgetrennt werden. Mithilfe des in EP 1033346 beschriebenen Verfahrens lässt sich Wasserstoff mit einer Reinheit von maximal 99,99 % von den restlichen gasförmigen Komponenten abtrennen.

Bei der Verwendung eines derartigen Verfahrens nach dem Stand der Technik entsteht bei Sauerstoffanteilen im Gasstrom von über 1 Vol.-% ein erhöhtes Sicherheitsrisiko. Der im Gasgemisch vorhandene Sauerstoff wird zunächst bei hohem Druck im Adsorber adsorbiert, im weiteren Verlauf aber durch stärker adsorbierende Komponenten wieder in die Gasphase verdrängt. Dies führt zu einer Sauerstoffanreicherung im Adsorber, so dass in Kombination mit dem im Gas vorhandenen Wasserstoff ein zündfähiges, explosives Gemisch entsteht. Dieses explosive Gemisch stellt in einem Druckwechseladsorptionsverfahren nach dem Stand der Technik ein Sicherheitsrisiko dar.

DE3427804 beschreibt ein Verfahren zur Gewinnung von Rein-CO und Rein-H₂ aus einem überwiegend aus Wasserstoff und Kohlenmonoxid bestehenden Gasgemisch. Das Gasgemisch wird in einem Reformer durch endotherme katalytische Oxidation von gegebenenfalls entschwefelten Kohlenwasserstoffen in Gegenwart von CO₂ als Sauerstoff liefernder Komponente erzeugt. Aus dem Reformiergas wird adsorptiv eine Rein-CO₂-, eine Rein-CO- und eine Rein-H₂-Fraktion gewonnen.

Der vorliegenden Erfindung liegt daher die Aufgabe zugrunde, ein Verfahren der eingangs erwähnten Art derart auszugestalten, dass die Bildung eines explosiven

Wasserstoff-Sauerstoff-Gasgemisches vermieden und das Sicherheitsrisiko eines derartigen Verfahrens minimiert wird.

Die vorliegende Aufgabe wird dadurch gelöst, dass ein Verfahren zur thermischen Umsetzung von Sauerstoff ohne Katalysator mit einem Druckwechseladsorptionsverfahren zur Abtrennung von Wasserstoff kombiniert wird, wobei das Druckwechseladsorptionsverfahren nach Verfahren zur thermischen Umsetzung von Sauerstoff durchgeführt wird.

Durch die Kombination eines Verfahrens zur thermischen Umsetzung von Sauerstoff ohne Katalysator mit einem Druckwechseladsorptionsverfahren wird der Sauerstoffgehalt im Gasgemisch schon vor dem Druckwechseladsorptionsverfahren derart minimiert, dass kein explosives Gasgemisch aus Wasserstoff und Sauerstoff entstehen kann. Verfahren zur thermischen Umsetzung von Sauerstoff haben sich als eine sehr stabile und robuste Technik erwiesen. Überraschenderweise kann dabei auf den Einsatz eines Katalysators verzichtet werden. Daher können die im Gasstrom enthaltenen Katalysatorgifte auch keinen Katalysator schädigen und eine Regeneration des Katalysators und damit verbundenen Produktionsausfall erfordern. Es hat sich außerdem gezeigt, dass bei Anwendung des erfindungsgemäßen Verfahrens eine katalytische Nachreinigung des abgetrennten Wasserstoffs in den meisten Fällen entfallen kann. Die Abreicherung des Sauerstoffs aus Sicherheitsgründen und die Abreicherung zum Erreichen der geforderten Produktreinheit finden so in einem Schritt statt.

Vorteilhafterweise werden durch die Anwendung des erfindungsgemäßen Verfahrens auch Gasströme mit einem Sauerstoffanteil von mehr als 1 Vol-% sicher von dem Druckwechseladsorptionsverfahren verarbeitet.

Bevorzugt wird das Verfahren zur thermischen Umsetzung von Sauerstoff bei einer Temperatur zwischen 300°C und 500°C durchgeführt. Bei einer Temperatur von 300°C bis 500°C lässt sich Sauerstoff sehr gut, hauptsächlich in Wasser, umsetzen.

Es ist von Vorteil den Gasstrom vor dem Verfahren zur thermischen Umsetzung von Sauerstoff vorzuwärmen, wobei die Vorwärmung des Gasstromes zweckmäßigerweise über einen Wärmetauscher im Gegenstrom mit dem Gasstrom nach dem Verfahren zur thermischen Umsetzung von Sauerstoff erfolgt. Der heiße Gasstrom nach dem thermischen Verfahren zur Umsetzung von Sauerstoff muss vor dem Druckwechseladsorptionsverfahren abgekühlt werden. Die Wärmeenergie kann durch die gleichzeitig Vorwärmung des Gasstroms vor dem thermischen Verfahren zur Umsetzung von Sauerstoff in dieser Ausgestaltung der Erfindung effektiv genutzt werden.

Zur Erreichung eines sehr hohen Reinheitsgrades des abgetrennten Wasserstoffes wird in einer anderen Ausgestaltung der Erfindung der abgetrennte Wasserstoff einem weiteren Verfahren zur katalytischen Entfernung von Restsauerstoffspuren unterzogen. Durch die Verwendung eines nachgeschalteten katalytischen Verfahrens zur Abtrennung von Sauerstoff kann die Produktreinheit weiter erhöht werden.

Mit der vorliegenden Erfindung gelingt es insbesondere, die Entstehung eines explosiven Gasgemisches aus Wasserstoff und Sauerstoff in einem Druckwechseladsorptionsverfahren zu vermeiden und somit das Sicherheitsrisiko zu minimieren.

## Patentansprüche

1. Verfahren zur Abtrennung von Wasserstoff aus einem Gasstrom mit Sauerstoffanteil, überwiegend bestehend aus Wasserstoff, Stickstoff, Sauerstoff, Kohlendioxid, Kohlenmonoxid, Methan und/oder anderen Kohlenwasserstoffen, **dadurch gekennzeichnet, dass** ein Verfahren zur thermischen Umsetzung von Sauerstoff ohne Katalysator mit einem Druckwechseladsorptionsverfahren zur Abtrennung von Wasserstoff kombiniert wird, wobei das Druckwechseladsorptionsverfahren nach dem Verfahren zur thermischen Umsetzung von Sauerstoff durchgeführt wird.

2. Verfahren nach Anspruch 1, **dadurch gekennzeichnet, dass** das Verfahren zur thermischen Umsetzung von Sauerstoff bei einer Temperatur zwischen 300°C und 500°C durchgeführt wird.

3. Verfahren nach Anspruch 1 oder 2, **dadurch gekennzeichnet, dass** der Gasstrom vor dem Verfahren zur thermischen Umsetzung von Sauerstoff vorgewärmt wird.

4. Verfahren nach dem Anspruch 3, **dadurch gekennzeichnet, dass** die Vorwärmung des Gasstromes über einen Wärmetauscher im Gegenstrom mit dem Gasstrom nach dem Verfahren zur thermischen Umsetzung von Sauerstoff erfolgt.

5. Verfahren nach einem der Ansprüche 1 bis 4, **dadurch gekennzeichnet, dass** der Wasserstoff nach dem Verfahren zur Abtrennung von Wasserstoff einem weiteren katalytischen Verfahren zur Sauerstoffentfernung unterzogen wird.

## Claims

1. Method for separating off hydrogen from a gas stream having an oxygen fraction and predominantly consisting of hydrogen, nitrogen, oxygen, carbon dioxide, carbon monoxide, methane and/or other hydrocarbons, **characterized in that** a method for thermally converting oxygen without, a catalyst is combined with a pressure-swing adsorption method for separating off hydrogen, wherein the pressure-swing adsorption method is carried out downstream of the method for thermally converting oxygen.

2. Method according to Claim 1, -**characterized in that** the method for thermally converting oxygen is carried out at a temperature between 300°C and 500°C.

3. Method according to Claim 1 or 2, **characterized in that** the gas stream is preheated upstream of the method for thermally converting oxygen.

4. Method according to Claim 3, **characterized in that** the gas stream is preheated by a heat exchanger in countercurrent flow with the gas stream downstream of the method for thermally converting oxygen.

5. Method according to any one of Claims 1 to 4, **characterized in that** the hydrogen, downstream of the method for separating off hydrogen, is subjected to a further catalytic method for oxygen removal.

## Revendications

1. Procédé de séparation d'hydrogène d'un courant gazeux contenant une fraction d'oxygène, essentiellement constitué d'hydrogène, d'azote, d'oxygène, de dioxyde de carbone, de monoxyde de carbone, de méthane et/ou d'autres hydrocarbures, **caractérisé en ce qu'**un procédé de réaction thermique d'oxygène sans catalyseur est combiné avec un procédé d'adsorption modulée en pression pour la séparation d'hydrogène, le procédé d'adsorption modulée en pression étant réalisé après le procédé de réaction thermique d'oxygène.

2. Procédé selon la .revendication 1, **caractérisé en ce que** le procédé de réaction thermique d'oxygène est réalisé à une température comprise entre 300 °C et 500 °C.

3. Procédé selon la revendication 1 ou 2, **caractérisé en ce que** le courant gazeux est préchauffé avant le procédé de réaction thermique d'oxygène.

4. Procédé selon la revendication 3, **caractérisé en ce que** le préchauffage du courant gazeux a lieu par un échangeur de chaleur à contre-courant avec le courant gazeux issu du procédé de réaction thermique d'oxygène.

5. Procédé selon l'une quelconque des revendications 1 à 4, **caractérisé en ce que** l'hydrogène est soumis à un procédé catalytique supplémentaire pour l'élimination de l'oxygène après le procédé de séparation de l'hydrogène.
